Europäisches Patentamt

European Patent Office

Office européen des brevets

(19)

(11) Veröffentlichungsnummer : **0 494 892 B1**

(12) # EUROPÄISCHE PATENTSCHRIFT

(45) Veröffentlichungstag der Patentschrift :
08.03.95 Patentblatt 95/10

(51) Int. Cl.$^6$ : **G11B 7/09**

(21) Anmeldenummer : **90914170.7**

(22) Anmeldetag : **20.09.90**

(86) Internationale Anmeldenummer :
**PCT/EP90/01595**

(87) Internationale Veröffentlichungsnummer :
**WO 91/05340 18.04.91 Gazette 91/09**

(54) **DETEKTIONSSCHALTUNG.**

(30) Priorität : **30.09.89 DE 3932831**

(43) Veröffentlichungstag der Anmeldung :
**22.07.92 Patentblatt 92/30**

(45) Bekanntmachung des Hinweises auf die
Patenterteilung :
**08.03.95 Patentblatt 95/10**

(84) Benannte Vertragsstaaten :
**AT BE CH DE DK ES FR GB IT LI LU NL SE**

(56) Entgegenhaltungen :
**PATENT ABSTRACTS OF JAPAN, vol. 9, no.
127 (P-360)(1850) 31 May 1985**

(73) Patentinhaber : **Deutsche Thomson-Brandt
GmbH
Postfach 1307
D-78003 Villingen-Schwenningen (DE)**

(72) Erfinder : **GLEIM, Günter
Oberer Sonnenbühl 22
D-7730 Villingen-Schwenningen 22 (DE)**
Erfinder : **FÜLDNER, Friedrich
Wilstorfstra e 19
D-7730 Villingen-Schwenningen (DE)**
Erfinder : **REKLA, Bernd
Konstanzer Stra e 24
D-7730 Villingen-Schwenningen (DE)**

## Beschreibung

Die Erfindung betrifft eine Detektionsschaltung für einen Spurregelkreis, der den von einem optischen Abtaster erzeugten Lichtstrahl entlang den Datenspuren eines Aufzeichnungsträgers führt, wobei der die Daten abtastende Lichtstrahl ein HF-Signal und ein Spurfehlersignal erzeugt und wobei geprüft wird, ob die Einhüllende des HF-Signals unter einen ersten vorgebbaren Schwellwert sinkt.

CD-Spieler, Videoplattenspieler, DRAW-Disc-Spieler oder magnetooptische Aufzeichnungs- und Wiedergabegeräte sind beispielsweise mit einem Spurregelkreis und einer optischen Abtastvorrichtung ausgestattet.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial tracking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren aer CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl zusätzlich in radialer Richtung verschiebbar oder z.B. um einen vorgebbaren kleinen Winkel kippbar. Mittels des Feinantriebs kann daher der Lichtstrahl ein kleines Stück - etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

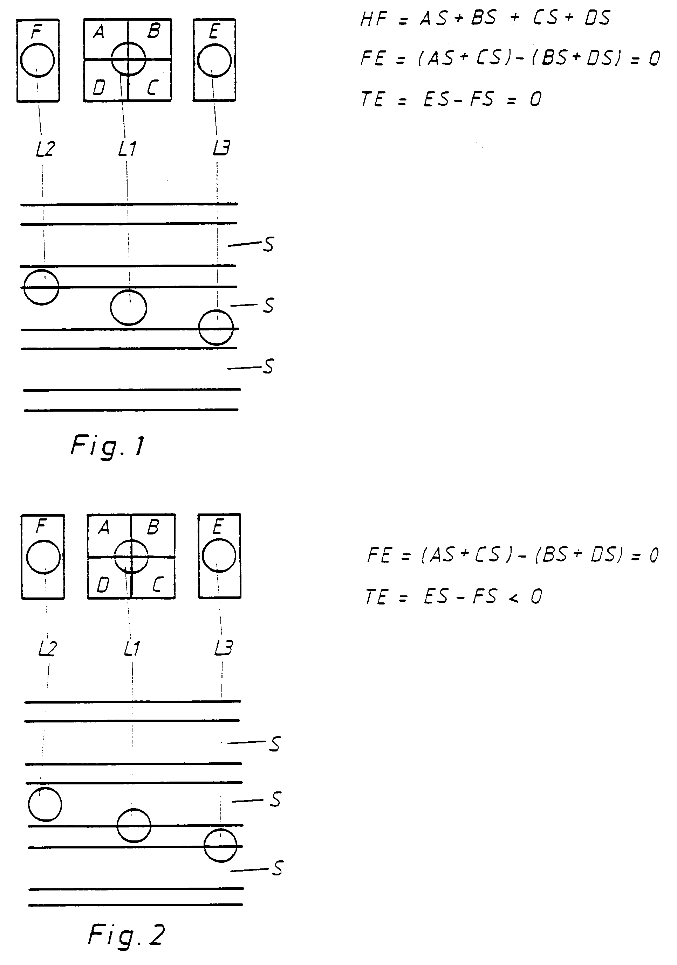

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Die Laserstrahlen L2 und L3 sind die Beugungsstrahlen +1. und -1. Ordnung. Eine derartige Abtastvorrichtung wird in der eingangs genannten Literaturstelle als Three-Beam-Pick-Up bezeichnet, weil sie mit drei Lichtstrahlen arbeitet.

Beim Photodetektor sind vier quadratförmige Photodioden A, B, C und D so zusammengefügt, daß sie wiederum ein Quadrat bilden. Vor dem aus den vier Photodioden A, B, C und D gebildeten Quadrat liegt eine rechteckige Photodiode E; hinter dem Quadrat ist eine weitere Photodiode F vorgesehen. Der mittlere Laserstrahl L1, der auf die vier Photodioden A, B, C und D fokussiert wird, erzeugt das Datensignal $HF = AS + BS + CS + DS$ und das Fokusfehlersignal $FE = (AS + CS) - (BS + DS)$. Die beiden äußeren Lichtstrahlen L2 und L3, von denen der vordere L3 auf die Photodiode E, der hintere L2 auf die Photodiode F fällt, erzeugen das Spurfehlersignal $T = ES - FS$. Mit AS, BS, CS, DS, ES und FS sind jeweils die Photospannungen der Dioden A, B, C, D, E und F bezeichnet.

In der Figur 1 folgt der mittlere Laserstrahl L1 genau der Mitte einer Spur S. Das Spuriehlersignal TE hat den Wert null.

$$TE = ES - FS = 0.$$

Wenn der mittlere Lichtstrahl von der Mitte einer Spur S abweicht, bewegt sich der eine Beugungsstrahl mehr zur Spurmitte hin, während der andere Beugungsstrahl auf den Zwischenraum zwischen zwei Spuren S strahlt. Weil aber die Reflexionseigenschaften einer Spur und eines Zwischenraumes unterschiedlich sind, wird der eine Beugungsstrahl stärker reflektiert als der andere.

In der Figur 2 ist der Fall dargestellt, daß die Laserstrahlen L1, L2 und L3 nach rechts von der Spur S verschoben sind. Das Spurfehlersignal nimmt einen negativen Wert an:

$$TE = ES - FS < 0.$$

Das Stellglied des Spurregelkreises bewegt die optische Abtastvorrichtung nun soweit nach links, bis das Spurfehlersignal TE null wird.

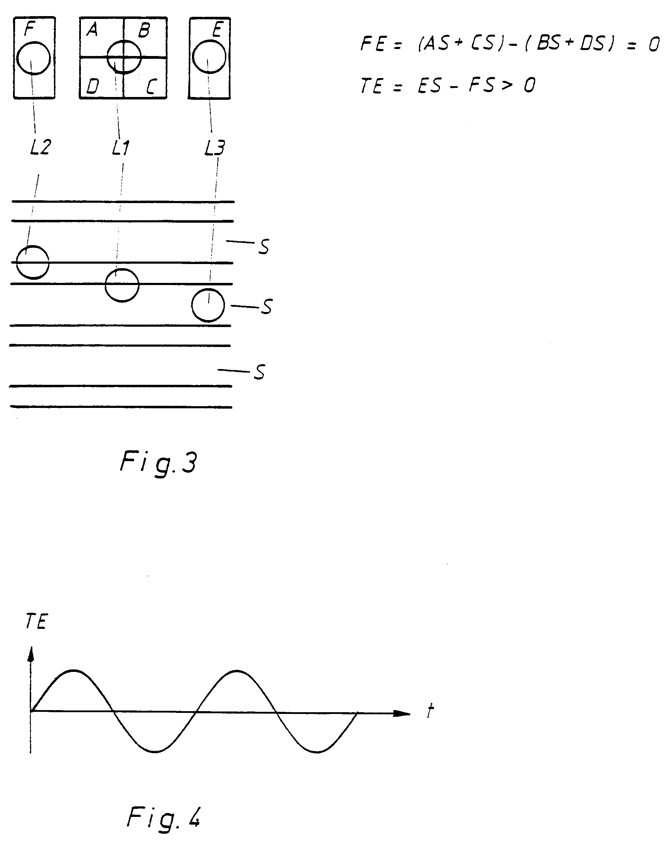

Im entgegengesetzten Fall, wenn die Laserstrahlen nach links von der Spur verschoben sind, ist das Spurfehlersignal positiv: $TE = ES - FS > 0$. Nun bewegt das Stellglied des Spurregelkreises die optische Abtastvorrichtung so weit nach rechts, bis das Spurfehlersignal TE null wird. Dieser Fall ist in Figur 3 gezeigt.

Wenn der Lichtstrahl L1 und die zugehörenden Beugungsstrahlen L2 und L3 mehrere Datenspuren kreuzen, nimmt das Spurfehlersignal TE den in Figur 4 gezeigten sinusförmigen Verlauf an.

Aus der JP-OS 60 10429 ist ein Spurregelkreis bekannt, bei dem an der unteren und oberen Hüllkurve des HF-Signals erkannt wird, ob der Lichtstrahl Datenspuren kreuzt. Wenn der Lichtstrahl über mehrere Datenspuren läuft, bricht das HF-Signal regelmäßig zwischen zwei Spuren zusammen.

Um die Anzahl der vom Lichtstrahl überstrichenen Spuren festzustellen, wird die Hüllkurve des HF-Signals gebildet und in ein impulsförmiges Signal umgewandelt, das dem Zähleingang eines Vorwärts-Rückwärts-Zählers zugeführt wird. Auf diese Weise werden von dem Vorwärts-Rückwärts-Zähler die HF-Einbrüche gezählt.

Um festzustellen, in welcher Richtung der Lichtstrahl bewegt wird, radial nach innen oder außen, ist eine sogenannte Richtungslogik erforderlich, welche die Phasenverschiebung zwischen dem Spurfehlersignal TE und der Einhüllenden des HF-Signals auswertet.

Aus der GB-A 2 073 543 ist ein Spurregelkreis bekannt, bei dem geprüft wird, ob das HF-Signal unter einem vorgegebenen Schwellwert liegt. Ist dies der Fall, so wird in Abhängigkeit vom Vorzeichen des Spurfehlersignals eine positive oder eine negative Spannung an das Stellglied des die Daten lesenden optischen Abtasters gelegt, um ihn auf die richtige Datenspur zu führen.

Weil aber Staub, Schmutz, Fingerabdrücke oder Kratzer auf einer CD-Platte ebenfalls einen Zusammenbruch des HF-Signals verursachen können, sind Maßnahmen zu treffen, die HF-Einbrüche, verursacht durch Schmutz oder Beschädigung auf dem Aufzeichnungsträger, von solchen HF-Einbrüchen, die ein Spurwechsel des Lichtstrahls bewirkt, voneinander unterscheiden zu können.

Aus der EP-A 0 183 303 ist ein CD-Spieler bekannt, bei dem das Einrasten des Lichtflecks auf eine Datenspur der Kompaktplatte, das sogenannte locking-in, am Punkt der größten Exzentrizität der Platte erfolgt, weil am Punkt der größten Exzentrizität die Relativgeschwindigkeit zwischen dem Lichtstrahl und der Datenspur am geringsten ist. Um die Anzahl der vom Lichtstrahl gekreuzten Datenspuren festzustellen, wird die Einhüllende des HF-Signals erzeugt und mit einem Schwellwert verglichen. Der Vergleich der Einhüllenden des HF-Signals mit dem ersten Schwellwert liefert ein impulsförmiges Signal. Jeder Impuls dieses impulsförmigen Signals zeigt einen Spurwechsel an.

Um den CD-Spieler sicherer gegen sogenannte drop-outs - das sind hörbare Störungen der Tonwiedergabe aufgrund einer fehlerhaften, zerkratzten oder verschmutzten Kompaktplatte - zu machen, kann die Einhüllende des HF-Signals mit einem zweiten Schwellwert verglichen werden. Aus der Einhüllenden des HF-Signals wird nur dann ein Impuls erzeugt, wenn die Einhüllende sowohl den ersten als auch den zweiten Schwellwert überschreitet und wenn der Drop-Out-Detektor des CD-Spielers nicht in Betrieb ist.

Aus der WO-A-88/09988 ist ein CD-Spieler mit einem Drop-Out-Detektor bekannt, der das HF-Signal auswertet.

Es ist daher Aufgabe der Erfindung, eine Detektionsschaltung gemäß Oberbegriff des Anspruchs 1 so zu gestalten, daß Schmutz oder Kratzer auf dem Aufzeichnungsträger nicht mehr einen Spurwechsel des abtastenden Lichtstrahls vortäuschen können.

Die Erfindung löst diese Aufgabe dadurch, daß die Detektionsschaltung jedoch erst dann ein Signal abgibt, das anzeigt, daß der die Daten abtastende Lichtstrahl eine Datenspur verläßt, wenn die Einhüllende des HF-Signals unter dem ersten vorgebbaren Schwellwert und gleichzeitig das Spurfehlersignal über einem zweiten vorgebbaren Schwellwert liegt.

Der Erfindung liegt die Erkenntnis zugrunde, daß beim Abtasten verschmutzter oder schadhafter Stellen des Aufzeichnungsträgers zwar der Pegel des HF-Signals sinkt, das Spurfehlersignal jedoch nicht nennenswert durch Schmutz und Schäden auf dem Aufzeichnungsträger gestört wird. Wenn daher nur das HF-Signal zusammenbricht, das Spurfehlersignal, die Abweichung des Istwerts vom Sollwert, aber annähernd den Wert Null beibehält, so ist anzunehmen, daß der HF-Einbruch durch Schmutz, Schäden oder Fehler auf dem Aufzeichnungsträger, nicht jedoch durch einen Spurwechsel des Lichtstrahls verursacht wurde. Sinkt dagegen der Pegel des HF-Signals unter einen ersten vorgebbaren Schwellwert und steigt gleichzeitig das Spurfehlersignal über einen zweiten vorgegebenen Schwellwert, so befindet sich der Lichtstrahl nicht mehr auf einer Spur, sondern auf dem sogenannten Rasen, der zwischen den Spuren vorgesehen ist.

Es zeigen

Figur 5          ein erstes Ausführungsbeispiel

Figur 6          ein zweites Ausführungsbeispiel

Figur 7 und 8          Impulsdiagramme zur Erläuterung des zweiten Ausführungsbeispiels.

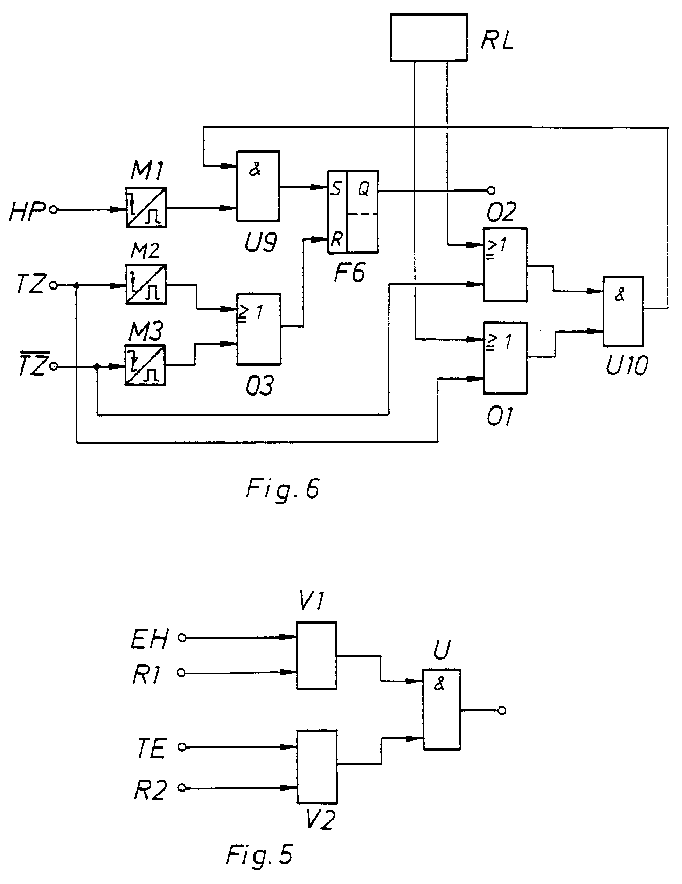

Anhand des ersten Ausführungsbeispiels in Figur 5 wird nun die Erfindung beschrieben und erläutert.

In der Figur 5 wird die Einhüllende EH des HF-Signals HF dem ersten Eingang eines Vergleichers V1 zugeführt, an dessen zweitem Eingang eine Referenzspannung R1 liegt. Das sinusförmige Spurfehlersignal TE wird dem zweiten Eingang eines Vergleichers V2 zugeführt, an dessem zweiten Eingang eine Referenzspannung R2 liegt. Die Ausgänge der beiden Vergleicher V1 und V2 sind mit den Eingängen eines UND-Gatters U verbunden, das an seinem Ausgang eine logische Eins abgibt, wenn der Pegel des HF-Signals HF unter der Referenzspannung R1 und gleichzeitig das Spurfehlersignal TE über der Referenzspannung R2 liegt.

Es wird nun das zweite in Figur 6 gezeigte Ausführungsbeispiel beschrieben.

Dem Eingang eines mit fallender Flanke triggerbaren Monoflops M1 wird ein impulsförmiges Hüllkurvensignal HP zugeführt, das aus der Hüllkurve des HF-Signals gewonnen wird. Ein impulsförmiges Spurfehlersignal TZ, das aus dem sinusförmigen Spurfehlersignal TE erzeugt wird, wird dem ersten Eingang eines ODER-Gatters O1 und einem mit fallender Flanke triggerbaren Monoflop M2 zugeführt. Das invertierte impulsförmige Spurfehlersignal TZ wird dem ersten Eingang eines ODER-Gatters O2 und einem mit fallender Flanke triggerbaren Monoflop M3 zugeführt. Die Ausgänge der Monoflops M2 und M3 sind mit den Eingängen eines ODER-Gatters O3 verbunden, dessen Ausgang mit dem Rücksetzeingang eines RS-Flip-Flops F6 verbunden ist. Der Ausgang des Monoflops M1 ist mit dem ersten Eingang eines UND-Gatters U9 verbunden, dessen Ausgang mit dem Setzeingang des RS-Flip-Flops F6 verbunden ist. Der eine Ausgang einer Richtungslogik RL, die in Abhängigkeit von der Bewegungsrichtung des Lichtstrahls entweder an ihrem einen oder anderen Ausgang eine logische Eins abgibt, ist mit dem zweiten Eingang des ODER-Gatters O1 verbunden, während der andere Ausgang der Richtungslogik RL an den zweiten Eingang des ODER-Gatters O2 angeschlossen ist. Die Ausgänge der ODER-Gatter O1 und O2 sind mit den Eingängen eines UND-Gatters U10 verbunden, dessen Ausgang mit dem zweiten Eingang des UND-Gatters U9 verbunden ist. Wenn der Lichtstrahl auf den zwischen zwei Spuren liegenden Rasen strahlt, ist das RS-Flip-Flop F6 gesetzt; dagegen ist es zurückgesetzt, wenn der Lichtstrahl auf eine Spur gerichtet ist.

Das Monoflop M1 gibt bei jeder fallenden Flanke des impulsförmigen Hüllkurvensignals HP an seinem Ausgang eine logische Eins ab. Weil das impulsförmige Hüllkurvensignal HP aus der Hüllkurve des HF-Signals gewonnen wird, tritt eine fallende Flanke im impulsförmigen Hüllkurvensignal immer dann auf, wenn der Pegel der Hüllkurve unter einen vorgebbaren Schwellwert sinkt. Wenn der Lichtstrahl in der einen Richtung bewegt wird, gibt das UND-Gatter U10 bei jedem positiven Impuls des impulsförmigen Hüllkurvensignals TZ eine logische Eins ab; das RS-Flip-Flop F6 wird nur gesetzt, wenn das Monoflop M1 gesetzt ist und gleichzeitig das impulsförmige Spurfehlersignal TZ einen positiven Impuls aufweist. Wird der Lichtstrahl in der anderen Richtung bewegt, so gibt das UND-Gatter U10 bei jedem positiven Impuls des invertierten impulsförmigen Spurfehlersignals TZ eine logische Eins ab. Das RS-Flip-Flop F6 wird gesetzt, wenn das Monoflop M1 gesetzt ist und gleichzeitig das invertierte impulsförmige Spurfehlersignal TZ einen positiven Impuls aufweist.

Durch eine fallende Flanke im impulsförmigen Spurfehlersignal TZ oder durch eine steigende Flanke im invertierten impulsförmigen Spurfehlersignal TZ wird das RS-Flip-Flop F6 zurückgesetzt.

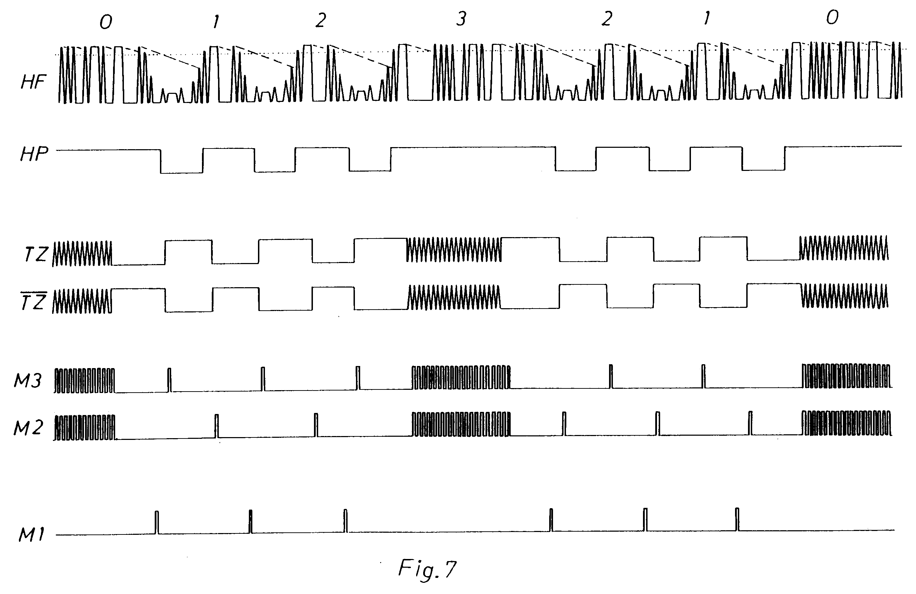

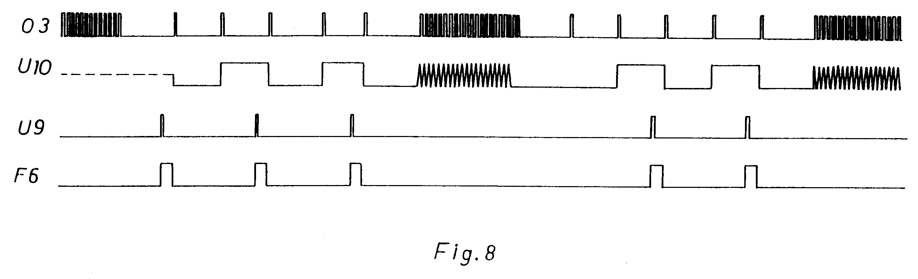

In den Figuren 7 und 8 sind das HF-Signal HF, das daraus gebildete impulsförmige Hüllkurvensignal HP, das sinusförmige Spurfehlersignal TE, das impulsförmige Spurfehlersignal TZ, das invertierte impulsförmige Spurfehlersignal TZ, die Ausgangssignale der Monoflops M1, M2 und M3, das Signal am Ausgang der UND-Gatter U9 und U10, das Signal am Ausgang des ODER-Gatters O3 sowie am Ausgang des RS-Flip-Flops F6 gezeigt.

Die Erfindung ist allgemein für Zählvorrichtungen zum Zählen von Markierungen oder für Regelkreise zum Positionieren einer Einheit, beispielsweise eines Abtasters, geeignet, bei der die Einheit durch Abtasten von Markierungen positioniert wird. Die Art der Abtastung, mechanisch oder berührungslos, spielt keine Rolle. Insbesondere ist die Erfindung für Spurregelkreise geeignet, wie sie z.B. in CD-Spielern, Viedeoplattenspielern, DRAW-Disc-Spielern oder magneto-optischen Aufzeichnungs- und/oder Wiedergabegeräten anzutreffen sind.

## Patentansprüche

1. Detektionsschaltung für einen Spurregelkreis, der den von einem optischen Abtaster erzeugten Lichtstrahl entlang den Datenspuren eines Aufzeichnungsträgers führt, wobei der die Daten abtastende Lichtstrahl ein HF-Signal (HF) und ein Spurfehlersignal (TE) erzeugt und wobei geprüft wird, ob, die Einhüllende (EH) des HF-Signals (HF) unter einen ersten vorgebbaren Schwellwert (R1) sinkt, **dadurch gekennzeichnet**, daß die Detektionsschaltung jedoch erst dann ein Signal abgibt, das anzeigt, daß der die Daten abtastende Lichtstrahl eine Datenspur verläßt, wenn die Einhüllende (EH) des HF-Signals (HF) unter dem ersten vorgebbaren Schwellwert (R1) und gleichzeitig das Spurfehlersignal (TE) über einem zweiten vorgebbaren Schwellwert (R2) liegt.

2. Detektionsschaltung nach Anspruch 2, **dadurch gekennzeichnet**, daß die Einhüllende (EH) des HF-Signals (HF) dem ersten Eingang eines ersten Vergleichers (V1) zugeführt wird, an dessen zweitem Eingang eine erste Referenzspannung (R1) liegt, daß das Spurfehlersignal (TE) dem ersten Eingang eines zweiten Vergleichers (V2) zugeführt wird, an dessen zweitem Eingang eine zweite Referenzspannung (R2) liegt, und daß die Ausgänge der Vergleicher (V1, V2) mit den Eingängen eines UND-Gatters (U) verbunden sind, dessen Ausgangssignal anzeigt, wenn der Lichtstrahl eine Datenspur verläßt.

3.  Detektionsschaltung für einen Spurregelkreis, der den von einem optischen Abtaster erzeugten Lichtstrahl entlang den Datenspuren eines Aufzeichnungsträgers führt, wobei der die Daten abtastende Lichtstrahl ein HF-Signal (HF) und ein Spurfehlersignal (TE) erzeugt und wobei aus der Einhüllenden (EH) des HF-Signals (HF) ein impulsförmiges Hüllkurvensignal (HP) erzeugt wird, **dadurch gekennzeichnet**, daß aus dem Spurfehlersignal (TE) ein impulsförmiges Spurfehlersignal (TZ) erzeugt wird, daß das impulsförmige Hüllkurvensignal (HP) einem mit fallender Flanke triggerbaren ersten Monoflop (M1) zugeführt wird, dessen Ausgang mit dem ersten Eingang eines ersten UND-Gatters (U9) verbunden ist, daß das impulsförmige Spurfehlersignal (TZ) einem mit fallender Flanke triggerbaren zweiten Monoflop (M2) und dem ersten Eingang eines ersten ODER-Gatters (O1) zugeführt wird, daß das invertierte impulsförmige Spurfehlersignal ($\overline{TZ}$) einem mit fallender Flanke triggerbaren dritten Monoflop (M3) und dem ersten Eingang eines zweiten ODER-Gatters (O2) zugeführt wird, daß die Ausgänge des zweiten und dritten Monoflops (M2, M3) mit den Eingängen eines dritten ODER-Gatters (O3) verbunden sind, dessen Ausgang mit dem Rücksetzeingang eines RS-Flip-Flops (F6) verbunden ist, daß der Ausgang des ersten UND-Gatters (U9) mit dem Setzeingang des RS-Flip-Flops (F6) verbunden ist, daß die Ausgänge des ersten und zweiten ODER-Gatters (O1, O2) mit den Eingängen eines zweiten UND-Gatters (U10) verbunden sind, dessen Ausgang mit dem zweiten Eingang des ersten UND-Gatters (U9) verbunden ist, daß je ein Ausgang einer Richtungslogik (RL) mit dem zweiten Eingang des ersten und zweiten ODER-Gatters (O1, O2) verbunden ist, daß die Richtungslogik (RL) in Abhängigkeit von der Bewegungsrichtung des Lichtstrahls entweder an ihrem einen oder anderen Ausgang eine logische Eins abgibt und daß das Signal am Q-Ausgang des RS-Flip-Flops (F6) anzeigt, ob der Lichtstrahl auf eine Datenspur oder auf den Raum zwischen zwei Spuren strahlt.

## Claims

1.  Detector circuit for a tracking control loop which guides the light beam produced by an optical scanner along the data tracks of a recording medium, wherein the light beam scanning the items of data generates a HF signal (HF) and a tracking error signal (TE) and wherein it is checked as to whether the envelope (EH) of the HF signal (HF) falls below a first predetermined threshold value (R1), characterised in that, the detector circuit only emits a signal, which indicates that the light beam scanning the items of data is departing from a data track, if the envelope (EH) of the HF signal (HF) lies below the first predetermined threshold value (R1) and if, simultaneously, the tracking error signal (TE) is above a second predetermined threshold value (R2).

2.  Detector circuit in accordance with Claim 1, characterised in that, the envelope (EH) of the HF signal (HF) is supplied to the first input of a first comparator (V1), on the second input of which, there is a first reference voltage (R1), that the tracking error signal (TE) is supplied to the first input of a second comparator (V2), on the second input of which, there is a second reference voltage (R2), and that the outputs of the comparators (V1, V2) are connected to the inputs of an AND gate (U) whose output signal indicates that the light beam is departing from a data track.

3.  Detector circuit for a tracking control loop which guides the light beam produced by an optical scanner along the data tracks of a recording medium, wherein the light beam scanning the items of data generates a HF signal (HF) and a tracking error signal (TE) and wherein a pulse-shaped signal (HP) corresponding to the curve of the envelope is generated from the envelope (EH) of the HF signal (HF), characterised in that, a pulse-shaped tracking error signal (TZ) is produced from the tracking error signal (TE), that the pulse-shaped envelope-curve signal (HP) is supplied to a first monoflop (M1) which can be triggered by a trailing edge and the output of which is connected to the first input of a first AND gate (U9), that the pulse-shaped tracking error signal (TZ) is supplied to a second monoflop (M2) which can be triggered by a trailing edge and to the first input of a first OR gate (O1), that the inverted pulse-shaped tracking error signal ($\overline{TZ}$) is supplied to a third monoflop (M3) which can be triggered by a trailing edge and to the first input of a second OR gate (O2), that the outputs of the second and third monoflops (M2, M3) are connected to the inputs of a third OR gate (O3) whose output is connected to the reset input of an RS flip-flop (F6), that the output of the first AND gate (U9) is connected to the set input of the RS flip-flop (F6), that the outputs of the first and second OR gates (O1, O2) are connected to the inputs of a second AND gate (U10) whose output is connected to the second input of the first AND gate (U9), that each output of a directional logic circuit (RL) is respectively connected to the second input of the first and second OR gates (O1, O2), that the directional logic circuit (RL) emits a logical one at either its one or other output in dependence on the direction of movement of the light beam and that the signal at the Q output of the RS flip-flop (F6) indicates whether the light beam is shining on a data track or on the space between two tracks.

## Revendications

1. Circuit de détection pour un dispositif de suivi de piste qui dirige le faisceau lumineux généré par un dispositif d'exploration optique le long des pistes de données d'un support d'enregistrement, le faisceau lumineux qui explore les données générant un signal HF (HF) et un signal d'erreur de piste (TE) et un contrôle étant effectué pour déterminer si l'enveloppe (EH) du signal HF (HF) descend sous une première valeur de seuil prédéterminée (R1), **caractérisé par le fait** que le circuit de détection ne délivre un signal indiquant que le faisceau lumineux qui explore les données quitte une piste de données, que lorsque l'enveloppe (EH) du signal HF (HF) est inférieure à la première valeur de seuil prédéterminée (R1) et que le signal d'erreur de piste (TE) est simultanément supérieur à une seconde valeur de seuil prédéterminée (R2).

2. Circuit de détection selon la revendication 1, **caractérisé par le fait** que l'enveloppe (EH) du signal HF (HF) est dirigée vers la première entrée d'un premier comparateur (V1) à la seconde entrée duquel est appliquée une première tension de référence (R1), que le signal d'erreur de piste (TE) est dirigé vers la première entrée d'un second comparateur (V2) à la seconde entrée duquel est appliquée une seconde tension de référence (R2) et que les sorties des comparateurs (V1, V2) sont connectées aux entrées d'une porte ET (U) dont le signal de sortie indique quand le faisceau lumineux quitte une piste de données.

3. Circuit de détection pour un dispositif de suivi de piste qui dirige le faisceau lumineux généré par un dispositif d'exploration optique le long des pistes de données d'un support d'enregistrement, le faisceau lumineux qui explore les données générant un signal HF (HF) et un signal d'erreur de piste (TE) et un signal impulsionnel de courbe d'enveloppe (HP) étant généré à partir de l'enveloppe (EH) du signal HF (HF), **caractérisé par le fait** qu'à partir du signal d'erreur de piste (TE) est généré un signal impulsionnel d'erreur de piste (TZ), que le signal impulsionnel de courbe d'enveloppe (HP) est dirigé sur une première bascule monostable (M1) déclenchable par front descendant, dont la sortie est connectée à la première entrée d'une première porte ET (U9), que le signal impulsionnel d'erreur de piste (TZ) est dirigé vers une deuxième bascule monostable (M2) déclenchable par front descendant et sur la première entrée d'une première porte OU (O1), que le signal impulsionnel d'erreur de piste complémenté (T̄Z̄) est dirigé vers une troisième bascule monostable (M3) déclenchable par front descendant et sur la première entrée d'une deuxième porte OU (02), que les sorties de la deuxième et de la troisième bascule monostable (M2, M3) sont connectées aux entrées d'une troisième porte OU (03) dont la sortie est raccordée à l'entrée de réinitialisation d'une bascule électronique RS (F6), que la sortie de la première porte ET (U9) est connectée à l'entrée de positionnement de la bascule électronique RS (F6), que les sorties de la première et de la deuxième porte OU (01, 02) sont connectées aux entrées d'une deuxième porte ET (U10) dont la sortie est connectée à la seconde entrée de la première porte ET (U9), que chaque sortie d'une logique directionnelle (RL) est connectée à la seconde entrée de la première et de la deuxième porte OU (01, 02), que la logique directionnelle (RL) délivre un niveau logique un à l'une ou l'autre de ses sorties en fonction du sens de déplacement du faisceau lumineux et que le signal à la sortie Q de la bascule électronique (F6) indique si le faisceau lumineux tombe sur une piste de données ou sur l'espace entre deux pistes.

$$HF = AS + BS + CS + DS$$

$$FE = (AS + CS) - (BS + DS) = 0$$

$$TE = ES - FS = 0$$

**Fig. 1**

$$FE = (AS + CS) - (BS + DS) = 0$$

$$TE = ES - FS < 0$$

**Fig. 2**

$$FE = (AS + CS) - (BS + DS) = 0$$

$$TE = ES - FS > 0$$

Fig. 3

Fig. 4

Fig. 6

Fig. 5

Fig.7

Fig. 8

EP 0 494 892 B1